(19) Europäisches Patentamt
European Patent Office
Office européen des brevets

(11) **EP 2 692 791 B1**

(12) **EUROPEAN PATENT SPECIFICATION**

(45) Date of publication and mention
of the grant of the patent:
**22.07.2015 Bulletin 2015/30**

(21) Application number: **12763006.9**

(22) Date of filing: **02.03.2012**

(51) Int Cl.:
*C08K 3/04* *(2006.01)*          *C08L 21/00* *(2006.01)*
*C09C 1/50* *(2006.01)*          *B60C 1/00* *(2006.01)*

(86) International application number:
**PCT/JP2012/001470**

(87) International publication number:
**WO 2012/132235 (04.10.2012 Gazette 2012/40)**

(54) **RUBBER COMPOSITION AND TIRE**

KAUTSCHUKZUSAMMENSETZUNG UND REIFEN

COMPOSITION DE CAOUTCHOUC ET PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.03.2011 JP 2011070457**

(43) Date of publication of application:
**05.02.2014 Bulletin 2014/06**

(73) Proprietor: **Bridgestone Corporation
Tokyo 104-8340 (JP)**

(72) Inventor: **FUJISAWA, Hidetada
Kodaira-shi
Tokyo 187-8531 (JP)**

(74) Representative: **Oxley, Robin John George et al
Marks & Clerk LLP
90 Long Acre
London WC2E 9RA (GB)**

(56) References cited:
**JP-A- 2 158 668          JP-A- 5 222 246
JP-A- 6 093 136          US-A- 4 550 135
US-B1- 6 197 870**

**Description**

TECHNICAL FIELD

The present invention is related to a rubber composition and a tire, and in particular to a rubber composition for tire treads that is capable of producing tire treads for which abrasion resistance, rolling resistance, factory workability, and chipping resistance have been simultaneously improved (a rubber composition for tire treads that is capable of producing tire treads with low heat-buildup, excellent abrasion resistance, and high rebound resilience), and a pneumatic tire manufactured using the same.

BACKGROUND ART

There is demand for a tire tread (tread rubber), where the tire contacts the ground, to have both excellent resistance to abrasion while running (abrasion resistance) and little hysteresis loss, which is generated upon deformation of rubber while running (rolling resistance), yet it is known that there exists a trade-off between these properties.
The properties of the tire tread are greatly affected by the physical properties of carbon black combined with the rubber composition for tire treads (for example, the specific surface area, structure, surface texture, and the like).
For example, if carbon black with a large specific surface area (small primary particle diameter) is combined with the rubber composition for tire treads, the abrasion resistance improves, yet problems occur such as increased rolling resistance, increased heat buildup due to a difficulty for carbon black to diffuse in the rubber composition for tire treads, and reduced factory workability due to a great increase in the unvulcanized rubber viscosity of the rubber composition for tire treads.
Furthermore, if carbon black with a high structure is combined with the rubber composition for tire treads, the abrasion resistance improves, yet problems occur such as higher rolling resistance, reduced factory workability due to a great increase in the unvulcanized rubber viscosity of the rubber composition for tire treads, reduced chipping resistance of a tire in which the rubber composition for tire treads is used, and furthermore an increase in heat buildup.
In order to solve these problems, the combination of carbon black having specific properties with the rubber composition for tire treads has been examined (for example, see JP5-230290A (PTL 1)).
A problem remains, however, in that the abrasion resistance, rolling resistance, factory workability, and chipping resistance of the tire tread cannot be simultaneously improved.

CITATION LIST

Patent Literature

PTL 1: JP5-230290A

SUMMARY OF INVENTION

It is an object of the present invention to provide a rubber composition for tire treads that is capable of producing tire treads for which abrasion resistance, rolling resistance, factory workability, and chipping resistance have been simultaneously improved, and to provide a pneumatic tire manufactured using the same.
As a result of intensive study to achieve the above object, the inventor discovered that the above object can be achieved by using a rubber composition containing 20 parts by mass to 100 parts by mass of carbon black combined with 100 parts by mass of a rubber component, the carbon black having a CTAB surface area of 60 $m^2$/g to 105 $m^2$/g, a 24M4DBP oil absorption of 70 $cm^3$/100 g (70 ml/100 g) to 105 $cm^3$/100 g (105 ml/100 g), a $N_2$SA/IA of 0.95 or less, and satisfying Expression (1). In other words, as a result of intensive study to achieve the above object, the inventor discovered that when the specific surface area (CTAB) and the structure (24M4DBP) of carbon black increase or decrease, the value of the tint strength (TINT) also increases or decreases, yet the surface area (CTAB), structure (24M4DBP), and value of the tint strength (TINT) exhibit a predetermined relationship, and when using a rubber composition in which the ratio $N_2$SA/IA of the nitrogen adsorption specific surface area $N_2$SA to the iodine absorption number IA satisfies a certain condition, the above object can be achieved. The present invention was completed based on these discoveries.
In other words, the rubber composition according to the present invention includes 20 parts by mass to 100 parts by mass of carbon black combined with 100 parts by mass of a rubber component. The carbon black has a CTAB surface area of 60 $m^2$/g to 105 $m^2$/g, a 24M4DBP oil absorption of 70 $cm^3$/100 g to 105 $cm^3$/100 g, a $N_2$SA/IA of 0.95 or less, and satisfies Expression (1).

$$\text{TINT (\%)} + 0.4 \times \text{24M4DBP oil absorption (cm}^3\text{/100 g)} - 0.5 \times \text{CTAB}$$

$$\text{surface area (m}^2\text{/g)} > 106 \qquad (1)$$

The carbon black preferably has a CTAB surface area of 90 m$^2$/g to 105 m$^2$/g.

The carbon black preferably has a 24M4DBP oil absorption of 85 cm$^3$/100 g to 105 cm$^3$ /100 g.

A tire according to the present invention includes a tire tread manufactured using the rubber composition according to the present invention.

According to the present invention, it is possible to provide a rubber composition for tire treads that is capable of producing tire treads for which abrasion resistance, rolling resistance, factory workability, and chipping resistance have been simultaneously improved, and to provide a pneumatic tire manufactured using the same.

BRIEF DESCRIPTION OF DRAWINGS

The present invention will be further described below with reference to the accompanying drawings, wherein:

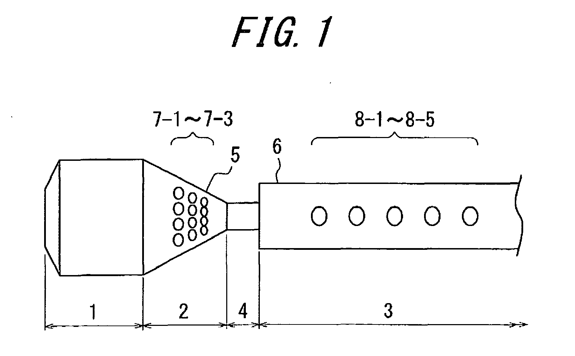

FIG. 1 is a cross-sectional diagram of a carbon black production device.

DESCRIPTION OF EMBODIMENTS

The following describes the present invention in detail.

Rubber Composition

The rubber composition according to the present invention includes at least a rubber component and carbon black, and as necessary, may further include other components such as zinc oxide, stearic acid, a cross-linking agent, a cross-linking promoter, and the like.

Rubber Component

The rubber component is not particularly limited and may be selected in accordance with the purpose. Examples include a diene rubber such as natural rubber (NR), polyisoprene rubber (IR), polybutadiene rubber (BR), styrene-butadiene copolymer rubber (SBR), acrylonitrilebutadiene rubber (NBR), and the like. One of these rubbers may be used alone, or two or more may be used in combination.

Carbon Black

The carbon black is not particularly limited and may be selected in accordance with the purpose, as long as the CTAB surface area is 60 m$^2$/g to 105 m$^2$/g, and preferably 90 m$^2$/g to 105 m$^2$/g.

If the CTAB surface area is less than 60 m$^2$/g, the abrasion resistance decreases, and upon exceeding 105 m$^2$/g, neither rolling resistance nor factory workability can be obtained. Conversely, a CTAB surface area within the above preferable range is advantageous by striking a balance between abrasion resistance, rolling resistance, and factory workability.

The CTAB surface area can, for example, be measured in compliance with the method in ISO 6810.

Note that a small CTAB surface area for carbon black denotes that the primary particle diameter of the carbon black is large.

The 24M4DBP oil absorption of the carbon black is not particularly limited and may be selected in accordance with the purpose, as long as the 24M4DBP oil absorption is 70 cm$^3$/100 g to 105 cm$^3$/100 g, and preferably 85 cm$^3$/100 g to 105 cm$^3$/100 g.

If the 24M4DBP oil absorption is less than 70 cm$^3$/100 g, the abrasion resistance decreases, and upon exceeding 105 m$^3$/100 g, neither rolling resistance nor factory workability can be obtained. Conversely, a 24M4DBP oil absorption within the above preferable range is advantageous by striking a balance between abrasion resistance, rolling resistance, and factory workability.

The 24M4DBP oil absorption can, for example, be measured in compliance with the method in ISO 6894.

Note that a small 24M4DBP oil absorption for the carbon black denotes that the carbon black has a reduced structure.

The N$_2$SA/IA value of the carbon black is not particularly limited and may be selected in accordance with the purpose, as long as the value is 0.95 or less, and preferably 0.88 to 0.95.

If $N_2SA/IA$ is less than 0.88, the abrasion resistance may decrease, whereas upon exceeding 0.95, chipping resistance cannot be obtained. $N_2SA/IA$ within the above preferable range is advantageous by making abrasion resistance compatible with chipping resistance.

The nitrogen adsorption specific surface area ($N_2SA$) can, for example, be measured with a single-point method in compliance with ISO 4652-1, and the iodine absorption number IA can be measured in compliance with the method in ISO 1304. The ratio thereof, $N_2SA/IA$, can then be calculated.

Note that a small value of $N_2SA/IA$ for carbon black denotes a small number of surface functional groups in the carbon black.

The TINT (tint strength) of the carbon black, the 24M4DBP oil absorption, and the CTAB surface area are not particularly limited and may be selected in accordance with the purpose, as long as they satisfy Expression (1).

$$\text{TINT (\%)} + 0.4 \times \text{24M4DBP oil absorption (cm}^3/100 \text{ g)} - 0.5 \times \text{CTAB}$$
$$\text{surface area (m}^2/\text{g)} > 106 \qquad (1)$$

Abrasion resistance cannot be obtained if the TINT, the 24M4DBP oil absorption, and the CTAB surface area do not satisfy Expression (1).

The TINT (tint strength) can, for example, be measured in compliance with the method in ISO 5435.

The compounding amount of carbon black is not particularly limited and may be selected in accordance with the purpose, as long as the compounding amount is 20 parts by mass to 100 parts by mass, and preferably 30 parts by mass to 70 parts by mass, with respect to 100 parts by mass of a rubber component in the rubber composition.

If the compounding amount of the carbon black is less than 20 parts by mass, the abrasion resistance decreases, whereas upon exceeding 100 parts by mass, rolling resistance cannot be obtained. Conversely, a compounding amount within the above preferable range is advantageous by making abrasion resistance compatible with rolling resistance.

Method of Producing Carbon Black

The method for producing the carbon black used in the present invention is not limited, so long as the carbon black has the above properties. As methods for producing carbon black, the furnace method, channel method, thermal method, acetylene method, and the like are well known, with the furnace method being the most general.

The carbon black used in the present invention can, for example, be produced by a furnace method using a cylindrical production device having a first region (combustion region) for causing fuel and oxygen-containing gas, such as air, to combust and generate combustion gas; a second region (tapered region), narrower than the first region, for supplying raw material for the carbon black and generating carbon black; and a third region (reaction region) larger than the choke region.

A preferred embodiment of the production device is described with reference to FIG. 1. The production device illustrated in FIG. 1 includes a first region 1 (consumption region), a second region 2 (tapered region), and a third region 3 (reaction region), as well as a choke 4 in a connecting portion between the second region 2 and the third region 3.

As a raw material for carbon black, the second region 2 supplies hydrocarbons or the like to the combustion gas generated in the first region 1 and generates carbon black by causing the raw material mainly to undergo thermal decomposition. The second region 2 gradually becomes narrower than a connecting portion with the first region 1 and connects to the choke 4 via a narrow cylindrical portion 5.

The second region 2 is provided with a raw material inlet 7 for supplying hydrocarbons or the like into the production device as raw material for carbon black. In order to supply the raw material into the second region 2 as evenly as possible, the raw material inlet 7 may be configured with a plurality of rows, such as the raw material inlets 7-1 to 7-3 illustrated in FIG. 1, and each of the raw material inlets 7-1 to 7-3 may be formed from a plurality of inlets.

The choke 4 provided in the connecting portion between the second region 2 and the third region 3 is a portion for adjusting the particle diameter of the obtained carbon black. The length of the choke 4 may be set appropriately for the desired carbon black particle diameter. In the present invention, a length of approximately 200 mm to 600 mm is preferable, with 300 mm to 500 mm being more preferable.

The third region 3 cools the combustion gas that passes through the choke 4 along with the carbon black to approximately 1000°C or less to obtain carbon black particles and is formed by a wide cylindrical portion 6 having a larger diameter than the choke 4. The combustion gas is cooled by supplying water or the like through a reaction stopping fluid inlet 8. The reaction stopping fluid inlet 8 may be configured with a plurality of rows, such as the reaction stopping fluid inlets 8-1 to 8-5 illustrated in FIG. 1.

The supply of fuel and of oxygen-containing gas, such as air, as well as the amount of supplied raw material and the method of supplying these is not particularly limited, yet the ratio of the diameter of the third region 3 to the diameter of the choke 4 (the diameter of the third region 3 / the diameter of the choke 4) is preferably 1.8 or greater, more preferably 2 or greater, and even more preferably 2.2 or greater. The upper limit of the ratio of the diameter of the third region 3 to the diameter of the choke 4 is not particularly limited, but considering the size of the production device, the ratio is preferably approximately 4 or less, and more preferably 3.5 or less. Note that an example of a preferred embodiment of the method of producing carbon black has been described, yet the carbon black of the present invention is not limited to being obtained in this way.

Cross-Linking Agent

The cross-linking agent is not particularly limited and may be selected in accordance with the purpose. Examples include sulfur, sulfide (sulfur oxide), and the like. One of these may be used alone, or two or more may be used in combination.

Increasing the compounding amount of sulfur used as the cross-linking agent increases resilience while preserving abrasion properties.

Cross-Linking Promoter

The cross-linking promoter is not particularly limited and may be selected in accordance with the purpose. Examples include N,N'-dicyclohexyl-2-benzothiazolylsulfenamide, diphenylguanidine, dibenzothiazyldisulfide, N-t-butyl-2-benzothiazylsulphenamide (N-t-butyl-2-benzothiazolylsulfenamide), hexamethylenetetramine, N,N'-diphenylthiourea, trimethylthiourea, N,N'-diethylthiourea, 1,3-diphenylguanidine, 2-mercaptobenzothiazole, N-cyclohexyl-2-benzothiazolylsulfenamide, and the like. One of these may be used alone, or two or more may be used in combination.

Increasing the compounding amount of the cross-linking promoter increases resilience by increasing the link density due to cross-linking.

Tire

A tire according to the present invention is not particularly limited and may be selected in accordance with the purpose, as long as it includes a tire tread manufactured using the rubber composition according to the present invention. A pneumatic tire, however, is preferable.

A customary method may be used as the method of producing the tire. For example, members normally used in tire production, such as a carcass layer, belt layer, tread layer, and the like made from unvulcanized rubber, may be layered onto a tire molding drum, and the drum may be extracted to yield a green tire. Next, the green tire can be vulcanized according to a regular method, thereby producing a desired pneumatic tire.

EXAMPLES

The following describes specific examples of the present invention, yet the present invention is not limited to these examples.

(Examples 1 to 3 and Comparative Examples 1 to 10)

Preparation of Rubber Compositions

In the proportions listed in Table 1 below, components were mixed in a Banbury mixer to prepare rubber compositions. The properties of the carbon black were measured with the method below. Furthermore, the carbon black was produced with an oil furnace method of production under the conditions listed in Table 2, using a furnace manufactured by Asahi Carbon Co., Ltd.

Note that this furnace is a cylindrical production device having a first region 1 (diameter: 700 mm, length: 1000 mm) for causing fuel and air to combust, a second region 2 (upstream end diameter: 700 mm, downstream end diameter: 230 mm, length: 1200 mm) for supplying raw oil and generating carbon black, a choke 4 (diameter: 230 mm, length: 400 mm), and a third region (diameter: 576 mm, length: 5000 mm, ratio of reaction region diameter / choke region diameter: 2.5).

Furthermore, in Comparative Example 6, ASTM N330 was used as the carbon black, and in Comparative Example 7, ASTM N339 was used as the carbon black.

Table 1

|  | Compounding Amount (parts by mass) |
|---|---|
| Natural Rubber | 100 |
| Carbon Black | 50 |
| Stearic Acid | 3 |
| Zinc Oxide | 5 |
| Cross-Linking Promoter NS[*1] | 1 |
| Sulfur | 1.5 |
| Note *1: N-t-butyl-2-benzothiazolylsulfenamide ||

Table 2

| | | Ex. 1 | Ex. 2 | Ex. 3 | Comp. Ex. 1 | Comp. Ex. 2 | Comp. Ex. 3 | Comp. Ex. 4 | Comp. Ex. 5 | Comp. Ex. 8 | Comp. Ex. 9 | Comp. Ex. 10 |
|---|---|---|---|---|---|---|---|---|---|---|---|---|
| Production Air Introduction Flow | kg/h | 1198 | 1195 | 1190 | 1201 | 1196 | 1194 | 1195 | 1192 | 1196 | 1194 | 1194 |
| Preheating Temperature | °C | 679 | 677 | 680 | 681 | 681 | 678 | 678 | 675 | 678 | 677 | 675 |
| Fuel Introduction Flow | kg/h | 57 | 57 | 55 | 57 | 56 | 55 | 56 | 55 | 56 | 56 | 55 |
| Raw Oil Introduction Flow | kg/h | 298 | 302 | 325 | 294 | 302 | 307 | 355 | 304 | 285 | 304 | 297 |
| Preheating Temperature | °C | 198 | 196 | 189 | 200 | 197 | 191 | 185 | 197 | 204 | 195 | 198 |
| Potassium Content | ppm | 0 | 10 | 0 | 0 | 3 | 0 | 0 | 20 | 0 | 22 | 0 |
| Cooling Water Flow | L/h | 150 | 145 | 120 | 130 | 130 | 155 | 145 | 170 | 140 | 142 | 145 |

Measurement of CTAB Surface Area

The CTAB surface area was measured in compliance with the method in ISO 6810.

Measurement of 24M4DBP Oil Absorption

The 24M4DBP oil absorption was measured in compliance with the method in ISO 6894.

Calculation of $N_2SA/IA$

The nitrogen adsorption specific surface area ($N_2SA$) was measured with a single-point method in compliance with ISO 4652-1, and the iodine absorption number IA was measured in compliance with the method in ISO 1304. The ratio thereof, $N_2SA/IA$, was then calculated.

Measurement of TINT (Tint Strength)

The TINT (tint strength) was measured in compliance with the method in ISO 5435.

Manufacture and Assessment of Tires

Using the rubber compositions manufactured as above in the tire tread, 11R22.5 truck tires were manufactured by vulcanization at 150°C for 45 minutes, and the abrasion resistance, rolling resistance, factory workability, and chipping resistance of the tires were assessed with the following methods. Tables 3A to 3C list the results.

Table 3A

| | Ex. 1 | Ex. 2 | Ex. 3 | Comp. Ex. 1 | Comp. Ex. 2 |
|---|---|---|---|---|---|
| CTAB ($m^2/g$) | 100 | 91 | 72 | 109 | 92 |
| 24M4DBP ($cm^3/100\ g$) | 101 | 88 | 104 | 107 | 96 |
| TINT (%) | 117 | 119 | 102 | 114 | 115 |
| $N_2SA/IA$ | 0.94 | 0.93 | 0.93 | 0.93 | 0.98 |
| TINT + 0.4 × 24M4DBP-0.5 × CTAB | 107 | 109 | 108 | 102 | 107 |
| Abrasion Resistance Index | 122 | 112 | 110 | 119 | 111 |
| Rolling Resistance Index | 104 | 102 | 96 | 108 | 103 |
| Factory Workability Index ($ML_{1+4}$) | 113 | 103 | 101 | 119 | 109 |
| Chipping Resistance Index (Tensile Test of Elongation at Break) | 115 | 116 | 105 | 107 | 104 |

Table 3B

| | Comp. Ex. 3 | Comp. Ex. 4 | Comp. Ex. 5 | Comp. Ex. 6 | Comp. Ex. 7 |
|---|---|---|---|---|---|
| CTAB ($m^2/g$) | 88 | 56 | 90 | 78 | 90 |
| 24M4DBP ($cm^3/100\ g$) | 100 | 102 | 68 | 86 | 101 |
| TINT (%) | 108 | 91 | 121 | 100 | 111 |
| $N_2SA/IA$ | 0.93 | 0.97 | 0.98 | 0.99 | 1.03 |
| TINT + 0.4 × 24M4DBP-0.5 × CTAB | 104 | 104 | 103 | 95 | 106 |
| Abrasion Resistance Index | 111 | 78 | 88 | 100 | 113 |
| Rolling Resistance Index | 104 | 89 | 103 | 100 | 104 |
| Factory Workability Index ($ML_{1+4}$) | 111 | 78 | 88 | 100 | 111 |

(continued)

|  | Comp. Ex. 3 | Comp. Ex. 4 | Comp. Ex. 5 | Comp. Ex. 6 | Comp. Ex. 7 |
|---|---|---|---|---|---|
| Chipping Resistance Index (Tensile Test of Elongation at Break) | 107 | 88 | 121 | 100 | 103 |

Table 3C

|  | Comp. Ex. 8 | Comp. Ex. 9 | Comp. Ex. 10 |
|---|---|---|---|
| CTAB ($m^2$/g) | 117 | 90 | 102 |
| 24M4DBP ($cm^3$/100 g) | 102 | 66 | 115 |
| TINT (%) | 125 | 127 | 113 |
| $N_2SA$/IA | 0.93 | 0.94 | 0.93 |
| TINT + 0.4 $\times$ 24M4DBP-0.5 $\times$ CTAB | 107 | 108 | 108 |
| Abrasion Resistance Index | 123 | 90 | 127 |
| Rolling Resistance Index | 116 | 104 | 106 |
| Factory Workability Index ($ML_{1+4}$) | 133 | 93 | 133 |
| Chipping Resistance Index (Tensile Test of Elongation at Break) | 116 | 127 | 104 |

Measurement of Abrasion Resistance Index

The above truck tires were mounted on a vehicle, and after running 40,000 kilometers, the amount of reduction of the tire grooves was measured and is listed as an index, with the inverse of the groove reduction amount of the tire according to Comparative Example 6 set to 100. A larger index indicates better abrasion resistance.

Measurement of Rolling Resistance Index

The above truck tires were allowed to rotate freely on a drum, and rolling resistance was measured and listed as an index, with the rolling resistance of the tire according to Comparative Example 6 set to 100. A smaller index indicates smaller rolling resistance, which is better.

Measurement of Factory Workability Index ($ML_{1+4}$)

The Mooney viscosity ($ML_{1+4}$) of an unvulcanized rubber composition sample was measured at 130°C in compliance with JIS K6300 and listed as an index, with the value for Comparative Example 6 set to 100. A smaller value is better.

Measurement of Chipping Resistance Index (Tensile Test of Elongation at Break)

In compliance with JIS K6251-1993, a tensile test was conducted on a vulcanized rubber composition sample (vulcanization time: 30 minutes at 145°C), and the elongation at break (Eb) was measured at 23°C and listed as an index, with the value for Comparative Example 6 set to 100. A larger value is better.

Tables 2A to 2C show that using a rubber composition including 20 parts by mass to 100 parts by mass of carbon black combined with 100 parts by mass of a rubber component, the carbon black having a CTAB surface area of 60 $m^2$/g to 105 $m^2$/g, a 24M4DBP oil absorption of 70 $cm^3$/100 g to 105 $cm^3$/100 g, a $N_2SA$/IA of 0.95 or less, and satisfying Expression (1), allows for the manufacture of a tire tread in which the abrasion resistance, rolling resistance, factory workability, and chipping resistance have been simultaneously improved.

REFERENCE SIGNS LIST

1: First region (combustion region)
2: Second region (tapered region)
3: Third region (reaction region)
4: Choke
5: Narrow cylindrical portion
6: Wide cylindrical portion
7: Raw material inlet
7-1 to 7-3: Raw material inlet
8: Reaction stopping fluid inlet
8-1 to 8-5: Reaction stopping fluid inlet

**Claims**

1. A rubber composition comprising 20 parts by mass to 100 parts by mass of carbon black combined with 100 parts by mass of a rubber component,
the carbon black having a CTAB surface area of 60 $m^2$/g to 105 $m^2$/g, a 24M4DBP oil absorption of 70 $cm^3$/100 g to 105 $cm^3$/100 g, a $N_2$SA/IA of 0.95 or less, and satisfying Expression (1).

$$\text{TINT (\%)} + 0.4 \times \text{24M4DBP oil absorption (cm}^3/100 \text{ g)} - 0.5 \times \text{CTAB surface area (m}^2/\text{g)} > 106 \qquad (1)$$

2. The rubber composition according to claim 1, wherein the carbon black has a CTAB surface area of 90 $m^2$/g to 105 $m^2$/g.

3. The rubber composition according to claim 1, wherein the carbon black has a 24M4DBP oil absorption of 85 $cm^3$/100 g to 105$cm^3$/100 g.

4. A tire comprising a tire tread manufactured using the rubber composition according to claim 1.

**Patentansprüche**

1. Kautschukzusammensetzung, umfassend 20 Massenteile bis 100 Massenteile Ruß kombiniert mit 100 Massenteilen einer Kautschukkomponente,
wobei der Ruß eine spezifische CTAB-Oberfläche von 60 $m^2$/g bis 105 $m^2$/g, einen 24M4DBP-Ölabsorptionswert von 70 $cm^3$/100 g bis 105 $cm^3$/100 g und einen $N_2$SA/IA-Wert von 0,95 oder weniger aufweist und der Formel (1) entspricht:

$$\text{TINT (\%)} + 0.4 \text{ x 24M4DBP-Ölabsorbtionswert (cm}^3/100 \text{ g)} - 0.5 \text{ x spezifische CTAB-Oberfläche (m}^2/\text{g)} > 106 \qquad (1).$$

2. Kautschukzusammensetzung nach Anspruch 1, wobei der Ruß eine spezifische CTAB-Oberfläche von 90 $m^2$/g bis 105 $m^2$/g aufweist.

3. Kautschukzusammensetzung nach Anspruch 1, wobei der Ruß einen 24M4DBP-Ölabsorptionswert von 85 $cm^3$/100 g bis 105 $cm^3$/100 g aufweist.

4. Reifen, umfassend eine Reifenlauffläche, die unter Verwendung der Kautschukzusammensetzung nach Anspruch 1 hergestellt wurde.

**Revendications**

1. Composition de caoutchouc comprenant de 20 parties en masse à 100 parties en masse de noir de carbone combinées avec 100 parties en masse d'un composant de caoutchouc,
   le noir de carbone ayant une surface spécifique CTAB de 60 $m^2$/g à 105 $m^2$/g, une valeur d'absorption d'huile 24M4DBP de 70 $cm^3$/100 g à 105 $cm^3$/100 g et une valeur $N_2$SA/IA de 0,95 ou moins, et satisfaisant la formule (1):

$$\text{TINT (\%)} + 0{,}4 \text{ x valeur d'absorption d'huile 24M4DBP } (cm^3/100 \text{ g}) - 0{,}5 \text{ x surface spécifique CTAB } (m^2/g) > 106 \qquad (1).$$

2. Composition de caoutchouc selon la revendication 1, dans laquelle le noir de carbone a une surface spécifique CTAB de 90 $m^2$/g à 105 $m^2$/g.

3. Composition de caoutchouc selon la revendication 1, dans laquelle le noir de carbone a une valeur d'absorption d'huile 24M4DBP de 85 $cm^3$/100 g à 105 $cm^3$/100 g.

4. Bandage pneumatique comprenant une bande de roulement fabriquée en utilisant la composition de caoutchouc selon la revendication 1.

# FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5230290 A